Europäisches Patentamt

European Patent Office

Office européen des brevets

(11) Publication number: **0 259 164 B1**

## EUROPEAN PATENT SPECIFICATION

(45) Date of publication of patent specification: **20.05.92**

(51) Int. Cl.⁵: **C08G 79/10**, C04B 35/58, D01F 9/10

(21) Application number: **87307787.9**

(22) Date of filing: **03.09.87**

The file contains technical information submitted after the application was filed and not included in this specification

(54) A melt-formable organoaluminum polymer.

(30) Priority: **04.09.86 US 903448**
**27.07.87 US 76182**

(43) Date of publication of application:
**09.03.88 Bulletin 88/10**

(45) Publication of the grant of the patent:
**20.05.92 Bulletin 92/21**

(84) Designated Contracting States:
**BE DE FR GB IT LU NL SE**

(56) References cited:
FR-A- 2 096 394
GB-A- 936 544

CHEMICAL ABSTRACTS, vol. 89, no. 20, 13th November 1978, page 120, abstract no. 165623f, Columbus, Ohio, US; & JP-A-78 68 700 (SUMITOMO CHEMICAL CO., LTD) 19-06-1978

Ullmanns Encyclopädie der Technischen Chemie, 4. Auflage., Bd. 12, S. 325 und Bd. 17, S. 320

Römpps Chemie-Lexikon, S. 138

(73) Proprietor: **E.I. DU PONT DE NEMOURS AND COMPANY**
**1007 Market Street**
**Wilmington Delaware 19898(US)**

(72) Inventor: **Tebbe, Frederick Nye**
**501 Gibben Road**
**Hockessin Delaware 19707(US)**

(74) Representative: **Watkins, Arnold Jack et al**
**European Patent Attorney Frank B. Dehn & Co. Imperial House 15-19 Kingsway**
**London WC2B 6UZ(GB)**

**Description**

Conversion of $(CH_3)_3Al$ and $NH_3$ to aluminum nitride is known: Bähr, FIAT, Rev. Ger. Sci., Inorg. Chem. II, 155 to 179 (1948). The reaction is as follows:

$$(CH_3)_3Al \bullet NH_3 \rightarrow (CH_3)_2AlNH_2 \rightarrow CH_3AlNH \rightarrow AlN.$$

There is no suggestion that the $CH_3AlNH$ intermediate was isolated or that the final reaction step was conducted in the presence of ammonia.

Laubengayer et al., J. Amer. Chem. Soc., 83, pages 542 to 546 (1961), disclose the reactions of amines at low temperatures with aluminum alkyls or alkyl aluminum chlorides to form 1:1 addition compounds. When such addition compounds having N-H and Al-R bonding are pyrolyzed, amide aluminum polymers, imide aluminum polymers and aluminum nitride are produced.

Laubengayer et al., Inorg. Chem., 1, pages 632 to 637 (1962), disclose the reaction of triphenylaluminum and methylamine in toluene solution to form methylamido triphenylaluminum, then methylamine diphenylaluminum, and then methyliminophenylaluminum. Triphenyl aluminum and dimethylamine form dimethylamine triphenylaluminum which is heated to form dimethylamido diphenylaluminum.

Cohen et al., J. Chem. Soc., pages 1092 to 1096 (1965), disclose that ethylaluminum dichloride and diethylaluminum chloride form complexes with ammonia. There is no ammonolysis of aluminum-chlorine bonds. On heating, the complexes form aluminum-nitrogen polymers. They also disclose the reaction of $(C_2H_5)_3Al$ and $NH_3$, and conversion of the product to $C_2H_5AlNH$ which is described as substantially infusible and therefore not subject to melt-forming techniques.

Interrante, in a meeting of the Materials Research Society, April, 1986, at Palo Alto, California, disclosed the conversion of $C_2H_5AlNH$ to aluminum nitride in the presence of ammonia. The aluminum nitride produced with ammonia contained less carbon than that formed without it. Interrante also disclosed that $C_2H_5AlNH$ is converted to aluminum nitride at $300\degree C$ to $900\degree C$ with retention of morphology.

Japanese Patent 54-13439 discloses a method for the production of aluminum nitride in the form of a powder. The method comprises purifying an organoaluminum compound followed by reacting it with ammonia or primary or secondary amines to prepare an aluminum nitride precursor having at least one aluminum nitrogen bond. The aluminum nitride precursor is converted to aluminum nitride by heating it above $400\degree C$ in the presence of an inert gas, vacuum or ammonia gas.

Additional relevant background includes the following: Strength of Aluminum Nitride Whiskers, Gribkov et al., Izvestiya Akademii Nauk SSSR, Neorganicheskie Materialy, Vol. 13 (10) pages 1775 to 1778, (1977); Role of Liquid Drops in the Growth of Filamentary Crystals of Aluminum Nitride, Portnoi et al., Izvestiya Akademii Nauk SSSR, Neorganicheskie Materialy, Vol. 6 (10) pages 1762 to 1767 (1970); Growth of AlN Whiskers During the Nitriding of Aluminum, Portnoi et al., Poroshkovaya Metallurgiya No. 5 (89) pages 10 to 14 (1970).

Canada 839,321 discloses AlN by carbothermal reduction. Fibers made according to the method disclosed in this patent contain excessive amounts of carbon. Japan 61-124626 discloses a method for making AlN fibers from aluminum metal fibers or from solution of an aluminum compound. U.S. 3,846,527 and U.S. 4,010,233 make reference to metal nitride fibers. This route to AlM fibers uses the carbothermal reductive nitridation reaction with attendant problems of either excess O or C. U.S. 3,529,044 discloses aluminum carbide and that if nitrogen is used, than metal nitride fibers result. The problem with such fibers would be the presence of too much C or O. U.S. 3,658,979 discloses large diameter fibers with a thin film of AlM on the surface. EPA 213,629 discloses aluminum nitride fibers prepared by heating precursor fibers, spun from a solution of aluminum oxychloride and polyvinyl alcohol, in nitrogen.

This invention concerns a fibre-forming polymer comprising the reaction product of $R_2AlNH_2$ and $R_3Al$, said polymer having a mole fraction derived from $R_3Al$ between 0.002 and 0.500. Polymer formation is accomplished by heating the $R_2AlNH_2$ and $R_3Al$ at elevated temperatures in the range of $120\degree C$ to $200\degree C$ with a preferred range of $140\degree$ to $175\degree$. The $R_3Al$ (R = alkyl) component of the disclosed polymer is synthesized by reaction of aluminum metal with a $C_2$ to $C_{10}$ olefin in the presence of hydrogen gas. The $R_3Al$ component (R = aryl) can be made, for example, by treatment of a trialkylaluminum with a triarylboron under conditions where alkyl and aryl exchange occurs. The $R_2AlNH_2$ component is made by reacting $R_3Al$ with ammonia according to the procedure of Cohen et al., J. Chem. Soc., pages 1092 to 1096 (1962).

In the polymer of this invention, R in $R_2AlNH_2$ is $C_xH_{2x+1}$ where x is from 1 to 10, and R in $R_3Al$ is phenyl, naphthyl, biphenyl or $C_xH_{2x+1}$; or phenyl, naphthyl or biphenyl substituted with $C_xH_{2x+1}$, $C_xH_{2x+1}O$, fluoride, chloride, or bromide. In addition, one of the R groups in $R_3Al$ can be hydrogen, i.e. $AlR_2H$.

This invention also concerns shaped articles and fibers formed from the polymer described above as well as composites containing said polymer. This invention also concerns methods of making shaped articles and fibers of aluminum nitride from the said polymer.

The polymer of this invention is made by combining $R_3Al$ and $R_2AlNH_2$ (individually synthesized) in the proper molar ratio, and heating; or, by adding $NH_3$ to $R_3Al$ to generate in situ the desired molar ratio of $R_3Al$ and $R_2AlNH_2$, followed by heating.

The viscosity of the polymer varies with the reaction time and temperature as well as the quantity of $R_3Al$ supplied to the system. The polymer can be made as a viscous liquid, or a glassy solid which is converted at temperatures above about 40°C to a viscous liquid. Fibers, even continuous fibers, can be drawn from the melt and cooled to ambient temperatures with retention of fiber morphology. Alternatively, fibers can be drawn from solutions, prepared by (i) dissolving the polymer in common organic solvents such as methylene chloride, n-hexane, cyclohexane, toluene, and the like, and (ii) evaporating the solvent from the solution of polymer, with preservation of the fibrous morphology. Fibers also can be prepared by pulling with a glass rod dipped into the molten or dissolved polymer or by use of conventional melt-spinning or solution-spinning equipment.

Treatment of the polymer in whatever form or shape with ammonia, hydrazine or similar nitrogen-containing compound cures it so that it is no longer fusible. One typical method for curing the polymer is to treat it in a stream of gas containing 10% to 99% ammonia in nitrogen, or pure ammonia, at a pressure of 1mm to 10 atmospheres and at a temperature of about 50°C to 175°C. Heating the cured polymer at about 800° to 1000°C in the presence of ammonia, hydrazine or the like will convert it to high purity aluminum nitride. The density of the aluminum nitride so produced can be increased by heating it to about 1800°C. Shaped articles such as films, tapes, composites and the like, as well as fibers, can be prepared, cured and converted to aluminum nitride by the procedure described above.

The aluminum nitride prepared by the method of this invention is characterized by high density which, in a preferred embodiment, is substantially equivalent to the theoretical density of aluminum nitride. The range of oxygen contained in the aluminum nitride of this invention will generally not exceed about 1.5 weight percent. Carbon content will not exceed about 0.5 weight percent and will typically be 0.1% or less. Accordingly, thermal conductivity will be very good, with values usually in excess of about 70 W/mK (watts/meter °K).

Utility and Composite Formation

Composites including shaped composites are formed by adding an inorganic nitride, oxide, carbide or RAlNH to the polymer, forming the shaped article, curing the polymer and heating to form a shaped article of aluminum nitride or aluminum nitride containing a disparate inorganic nitride, an oxide, or a carbide component. Inorganic nitrides, oxides and carbides which can be used for preparation of the composites of this invention include $SiO_2$, $Si_3N_4$, SiC, TiC, ZrC, $B_2O_3$, BN, $Al_2O_3$, $TiO_2$, TiN, $Mg_2Al_4Si_5O_{18}$ and $ZrO_2$, in addition to AlN. The amount of oxide, nitride or carbide contained in the composite can be as high as 85% or more.

An alternative method for forming composites comprises adding an inorganic oxide or RAlNH to the polymer, forming the shaped article, exposing the shaped article to moisture to convert the polymer to Al-$(OH)_3$, and heating at about 800° to 1800°C to form a shaped article of alumina of alumina containing other inorganic oxides.

Films are prepared by applying a thin coating of the polymer on a substrate such as silicon metal, curing the polymer and heating at about 800° to 1800°C to form a film of aluminum nitride on a substrate. Tapes are prepared by extruding the polymer from a die of appropriate thickness, curing, and heating at about 800° to 1800° to form tapes of aluminum nitride.

The polymer of this invention can be melt-shaped and converted to aluminum nitride of corresponding morphology by treatment in accordance with the foregoing description, or solubilized and shaped in accordance with liquid-handling techniques. The solvent can then be removed in any convenient manner and the polymer cured and converted to aluminum nitride.

The solutions can be spray-dried to produce polymer particles which can be cured and then heated to convert them to aluminum nitride of corresponding morphology. The polymer of this invention, in any of the nearly unlimited number of shapes in which it can be made, is combinable with other materials to form composites, reinforced materials, and the like. The shaped articles are useful in ceramic and heat conduction applications, especially in preparation of dense microcircuitry where heat generation is a problem.

The following Examples illustrate the invention. Procedures and reactions were conducted under an atmosphere of nitrogen or, where noted, ammonia or ammonia-nitrogen mixtures.

### Example 1

With the exclusion of air and moisture triethylaluminum, 80ml, in a 500 ml round-bottomed flask was stirred and treated with gaseous ammonia at 24°C to 65°C. An excess of ammonia was supplied to insure that the reaction proceeded to completion. The reaction mixture consisted of $(C_2H_5)_2AlNH_2$ and ammonia. Excess ammonia was evaporated from the stirred mixture by warming it to 56°C under a vacuum of about 0.1 torr. The product was $(C_2H_5)_2AlNH_2$.

A solution of the $(C_2H_5)_2AlNH_2$ (2.5g) and $(C_2H_5)_3Al$ (0.35g) was heated at 144°C to 164°C for 0.5 hours. The product, a polymeric reaction product of amidodiethylaluminum and triethylaluminum, was a viscous liquid at the synthesis temperature.

### Example 2
Preparation of Polymer Fibers

A portion of the viscous liquid product from Example 1 was heated to 165°C and fibers drawn from the melt. Upon cooling to ambient temperature the fibers were converted to a glassy solid with retention of the fiber morphology.

### Example 3
Preparation of AlN Fibers

The fibers from Example 2 were placed in a quartz tube and treated at ambient temperature overnight with a continuous flow of ammonia (10%) in nitrogen at atmospheric pressure. With continued flow of gas, the tube was heated. The temperature to which the tube was heated, the rate of increase of temperature, and the time at temperature was: 70°C, 1°C/min, 1.5 hr; 125°C, 1°/min, 1.5 hr; 150°C, 1°/min, 1.5hr; 200°C, 1°/min, 1 hr; 280°C, 0.5°/min, 1.5 hr; 300°C, 1°/min, 1.5 hr; 350°C, 1°/min, 1.5 hr; 900°C, 1°/min, 2 hr. The fibers so prepared were fine-grained ceramics with the X-ray powder pattern of aluminum nitride.

### Examples 4 to 13
Preparation Polymer

$(C_2H_5)_2AlNH_2$ and $(C_2H_5)_3Al$ were combined in the indicated ratio to form a solution which was heated as indicated in the following Table. In each experiment, the solution became more viscous with time, at the reaction temperatures. The solutions remained transparent for $(C_2H_5)_3Al$ mole fractions of 0.474 to 0.009. Fibers were drawn from the solutions of Examples 5 through 13.

Table

| Example | Mole Fraction $(C_2H_5)_3Al$ | Conditions |
|---|---|---|
| 4 | 0.474 | 162° to 168°C/60 min |
| 5 | 0.306 | 157° to 172°C/15 min |
| 6 | 0.228 | 161° to 171°C/15 min |
| 7 | 0.056 | 157° to 172°C/46 min |
| 8 | 0.049 | 158° to 167°C/57 min |
| 9 | 0.042 | 159° to 170°C/38 min |
| 10 | 0.029 | 168° to 170°C/25 min |
| 11 | 0.018 | 159° to 179°C/75 min |
| 12 | 0.009 | 150° to 179°C/59 min |
| 13 | 0.002 | 155° to 175°C/50 min |

Examples 14 to 22
Preparation of AlN Fibers

The polymers made by the procedure described for Examples 5 to 13 can be converted to AlN fibers according to the procedure described with respect to Example 3.

Example 23

A mixture of $Et_2AlNH_2$, 100g, and $AlEt_3$, 2.0g, was heated at 129°C to 172°C for 1 hr and 35 min. The temperature range during most of the reaction period was 159° to 173°C. The reaction was stopped after the evolution of 25.10g of ethane. The reaction product was cooled to approximately 110° to 125°C, and vacuum was applied over a period of approximately 1 hr and 15 min to remove the small amount of ethane dissolved in the polymer. After removal of the dissolved gas, the polymer was cast in cylindrical plugs having the dimensions 0.75 inch x 1.3 inch (19 x 33 mm).

Example 24

Fibers were melt-spun from the polymer of Example 23 in a nitrogen filled dry-box from a single hole spinneret, 0.004 inch diameter by 0.008 inch long (100 $\mu$m diameter by 200 $\mu$m long), at 113°C. Polymer was filtered through screens immediately preceeding the spinneret and after extrusion wound onto a bobbin at 115m/min. The fibers were cut off the bobbin, removed as a skein, and transferred to a quartz pyrolysis tube while maintaining an inert atmosphere. The fibers were then pyrolyzed by heating in ammonia from room temperature to 150°C at 3°C/min, from 150°C to 300°C at 5°C/min, then rapidly heating to 900°C. After cooling to room temperature, the fibers were transferred to a graphite resistance furnace and heated in nitrogen to 1706°C. The fibers were analyzed for carbon content and found to contain 0.07 percent carbon.

Example 25

Another sample of fibers was prepared from the polymer of Example 23 by extrusion through a 0.010 inch diameter by 0.015 inch long spinneret (250 $\mu$m diameter by 380 $\mu$m long) at 103°C, and collected at 120m/min. These fibers were pyrolyzed in ammonia in the same manner and heated to a final temperature of 1527°C in nitrogen. The fibers were white and contained 0.13 percent carbon. The X-ray powder diffraction pattern shown aluminum nitride as the only detectable phase.

Example 26

Polymer was prepared by the general method of Example 23 with production of 24.58 grams of ethane. The polymer was degassed and cast into cylindrical plugs.

Example 27

In a nitrogen filled dry-box, fibers were spun from the polymer of Example 26 by extrusion through a single 0.006 inch diameter by 0.012 inch long spinneret hole (150 $\mu$m diameter by 300 $\mu$m long) using a back pressure of 600 psi (4 MPa). Spinneret temperature was 113°C to 115°C. Fibers were wound onto bobbins at 147m/min. Asspun fibers were removed from the bobbins as skeins and transferred to pyrolysis tubes. Fibers were heated in ammonia at 1.5°C/min to 250°C, then rapidly to 1000°C. The fibers were then transferred to a graphite resistance furnace and heated in nitrogen to 1750°C. Fibers were white and X-ray diffraction powder patterns showed aluminum nitride with a trace of aluminum oxynitride as a second phase.

To test the thermal conductivity of the fibers a small uniaxial composite was prepared: 1.83g of fibers were laid into a simple 2.25 X 0.5 X 0.125 inch mold (57 x 13 x 3mm) along with enough room temperature curable epoxy resin (Buehler Epoxide, resin: hardener, 5:1) to fill the mold. After curing overnight in a laboratory press, the composite was removed from the mold. Resin-rich areas along the sides of the composite were trimmed. Using the guarded longitudinal bar method, thermal conductivity of the composite was measured to be 27 W/mK at 5°C in the direction parallel to the fibers. The section used for thermal conductivity was analyzed for fiber volume fraction by measuring the volume and determining the amount of fiber present after burning out the epoxy resin. Burnout at 650°C left a residue of A1N the weight of which was confirmed by conversion of the A1N to alumina at 1050°C. The calculated volume fraction of A1N in the composite was 0.33. The thermal conductivity of the fibers was calculated to be 81 W/mK.

The guarded longitudinal bar method utilized to measure thermal conductivity is operated as follows. Rod samples of length about 1.25" to 2" (32mm to 50mm) and of square, rectangular or circular cross-section between 1/16 and 1/64 sq inches (40 and 10mm$^2$) are used. These are pre-drilled with four holes, one at each end and two spaced about 1/3 and 2/3 of the way along the sample. One end of the sample is attached to a temperature controlled cold sink while the sample heater is attached to the other end. Thermocouples are inserted onto the holes along the samples. The heat flow (dQ/dt) provided to the sample heater is measured using four-point electrical techniques. The temperature difference (dT) measured by the thermocouples, which are cross-calibrated at a range of temperatures, is combined with the separation of the thermocouples (dx), to provide the temperature gradient along the sample (dT/dx). The thermal conductivity is then determined from this equation where A is cross-sectional area:

$$(dQ/dt) = kA(dT/dx).$$

To minimise direct radiation heat losses, the sample is shielded along its entire length by a heated guard provided with a separate heater and separate thermocouples located directly opposite those on the sample. Computer control matches the temperature of a point on the sample to a parallel point on the guard thus providing a comparable temperature gradient in both sample and guard. The space between the sample and the guard is filled with a dispersed fibrous insulation to further reduce radiative losses. The sample and associated guard are mounted within a uniform temperature furnace which provides an operating ambient temperature corresponding to the temperature mid-point of the sample.

The entire experimental system of sample, guard and outer furnace is mounted in a vacuum and attached to a variable temperature cryo-pyrostat which can operate between 77°K (-190°C) and 573°K (+300°C). Liquid nitrogen is used as the coolant below room temperature and ice water as the coolant above room temperature. A temperature controller is used to maintain intermediate temperatures constant to 0.1°K. Experiment control and data acquisition is by micro-computer. The system is checked for consistency by periodic measurements of standard materials such as Armco Iron, high density sintered alumina and a specified glass. The lower limit of measurement on this system is about 1 W/mK. The accuracy of measurement is 5% under normal conditions though it can be reduced to better than 3% under special conditions.

Example 28

Polymer was prepared by the general method of Example 23 with production of 25.30 grams of ethane. The polymer was degassed and cast into a cylindrical shape.

Example 29

Polymer was prepared from 150 grams of Et$_2$AlNH$_2$ and 3.0 grams of AlEt$_3$ by the general method of Example 23. The ethane produced was 38.59 grams. The polymer was degassed and cast into a cylindrical shape.

It will be appreciated by one skilled in the art with respect to the method of Examples 23 to 29 that production of (EtAlNH)$_n$•AlEt$_3$ from Et$_2$AlNH$_2$ and AlEt$_3$ is accompanied by the formation of ethane gas. The progress of the reaction was determined by the quantity of ethane formed. The ethane was measured on a calibrated wet test meter. Calibration was as follows. Ethane, Matheson Research Purity, was released from a tared cylinder and conducted to a wet test meter, which displays the quantity of gas passed through the meter as liters of gas. In the calibration, the weight of gas supplied to the meter, and the response of the meter to the gas, were recorded. Found: (g ethane/liter): 1.22; 1.23; 1.21; 1.22; average, 1.22.

Example 30

A mixture of (C$_2$H$_5$)$_2$AlNH$_2$, 2.5g, and triphenylaluminum, AlPh$_3$, 0.13g, was heated at 145° to 174°C for 55 minutes. After the reaction period, the reaction mixture was cooled to 70° to 75°C, and fibers were pulled from the melt.

EP 0 259 164 B1

## Claims

1. A fibre-forming polymer comprising the reaction product of $R_2AlNH_2$ and $R_3Al$ having a mole fraction derived from $R_3Al$ between 0.002 and 0.500 wherein R in $R_2AlNH_2$ is $C_xH_{2x+1}$ where x is from 1 to 10, and wherein R in $R_3Al$ is phenyl, naphthyl, biphenyl or $C_xH_{2x+1}$; or phenyl, naphthyl or biphenyl substituted with $C_xH_{2x+1}$, $C_xH_{2x+1}O$, fluoride, chloride, or bromide; and wherein one of the R groups in $R_3Al$ is optionally hydrogen; the polymer being formed by heating the $R_2AlNH_2$ and $R_3Al$ at a temperature in the range of 120° to 200°C.

2. A shaped article of the polymer according to Claim 1.

3. A composite of a polymer according to Claim 1 and one or more of an inorganic oxide, carbide, or nitride.

4. A method for making a composite of AlN and one or more of $SiO_2$, $Si_3N_4$, SiC, $Al_4C_3$, TiC, ZrC, $B_2O_3$, BN, $Al_2O_3$, $TiO_2$, TiN, $ZrO_2$, and $Mg_2Al_4Si_5O_{18}$ comprising curing a composite according to Claim 3 and heating at a temperature of 800° to 1000°C in the presence of ammonia or hydrazine.

5. A method for making a fiber of the polymer according to Claim 1 comprising melt-forming a fiber from the polymer in a viscous liquid state.

6. A method for making a fiber of the polymer according to Claim 1 comprising forming a fiber from a solution of the polymer.

7. A method for making a fiber of aluminum nitride comprising curing a fiber of the polymer according to Claim 1, and heating at a temperature of 800° to 1000°C in the presence of ammonia or hydrazine.

8. A method for making a shaped article of aluminum nitride comprising curing a shaped article of polymer according to Claim 1, and heating at a temperature of 800° to 1000°C in the presence of ammonia or hydrazine.

9. A method for making a shaped article of an aluminum nitride-containing composite comprising shaping a composite according to Claim 3, curing the shaped composite and heating the cured composite at a temperature of 800°C to 1000°C in the presence of ammonia or hydrazine.

10. A spray-dried particle of a polymer according to Claim 1.

11. A method for making a composite of $Al_2O_3$ comprising exposing the polymer of Claim 1 to moisture to convert it to $Al(OH)_3$ and heating the $Al(OH)_3$ in the presence of at least one member of the group $SiO_2$, $B_2O_3$, $TiO_2$, $ZrO_2$, and $Mg_2Al_4Si_5O_{18}$.

## Revendications

1. Un polymère formant des fibres comprenant le produit de réaction de $R_2AlNH_2$ et $R_3Al$ renfermant une fraction molaire dérivée de $R_3Al$ comprise entre 0,002 et 0,500, où R dans $R_2AlNH_2$ est un groupe $C_xH_{2x+1}$, avec x valant de 1 à 10, et où R dans $R_3Al$ est un groupe phényle, naphtyle, biphényle ou $C_xH_{2x+1}$ ; ou phényle, naphtyle ou biphényle substitué par $C_xH_{2x+1}$, $C_xH_{2x+1}O$, fluorure, chlorure ou bromure; et où l'un des groupes R dans $R_3Al$ est facultativement un atome d'hydrogène ; le polymère étant formé par chauffage de $R_2AlNH_2$ et $R_3Al$ à une température se situant dans l'intervalle de 120 à 200°C.

2. Un objet façonné du polymère selon la revendication 1.

3. Un matériau composite d'un polymère selon la revendication 2 et d'un ou plusieurs composés choisis entre un oxyde minéral, un carbure minéral et un nitrure minéral.

7

**4.** Un procédé pour l'obtention d'un matériau composite d'AlN et d'un ou plusieurs des composés $SiO_2$, $Si_3N_4$, SiC, $Al_4C_3$, TiC, ZrC, $B_2O_3$, BN, $Al_2O_3$, $TiO_2$, TiN, $ZrO_2$ et $Mg_2Al_4Si_5O_{18}$ comprenant le durcissement d'un matériau composite selon la revendication 3 et son chauffage à une température de 800 à 1000°C en présence d'ammoniac ou d'hydrazine.

**5.** Un procédé pour l'obtention d'une libre du polymère selon la revendication 1 comprenant le façonnage à l'état fondu d'une libre à partir du polymère dans un état liquide visqueux.

**6.** Un procédé pour l'obtention d'une libre du polymère selon la revendication 1 comprenant la formation d'une libre à partir d'une solution du polymère.

**7.** Un procédé pour l'obtention d'une fibre de nitrure d'aluminium comprenant le durcissement d'une libre du polymère selon la revendication 1 et son chauffage à une température de 800 à 1000°C en présence d'ammoniac ou d'hydrazine.

**8.** Un procédé pour l'obtention d'un objet façonné en nitrure d'aluminium comprenant le durcissement d'un objet façonné en polymère selon la revendication 1 et son chauffage à une température de 800 à 1000°C en présence d'ammoniac ou d'hydrazine.

**9.** Un procédé pour l'obtention d'un objet façonné en un matériau composite contenant du nitrure d'aluminium comprenant le façonnage d'un matériau composite selon la revendication 3, le durcissement du matériau composite façonné et le chauffage du matériau composite durci à une température de 800 à 1000°C en présence d'ammoniac ou d'hydrazine.

**10.** Une particule séchée par pulvérisation d'un polymère selon la revendication 1.

**11.** Un procédé pour l'obtention d'un matériau composite à base d'$Al_2O_3$ comprenant l'exposition du polymère de la revendication 1 à de l'humidité pour le transformer en $Al(OH)_3$ et le chauffage de l'Al-$(OH)_3$ en présence d'au moins un membre du groupe $SiO_2$, $B_2O_3$, $TiO_2$, $ZrO_2$ et $Mg_2Al_4Si_5O_{18}$.

**Patentansprüche**

**1.** Faserbildendes Polymer, welches das Reaktionsprodukt aus $R_2AlNH_2$ und $R_3Al$ mit einer von $R_3Al$ abgeleiteten Molfraktion zwischen 0,002 und 0,500 aufweist, worin R in $R_2AlNH_2$ $C_xH_{2x+1}$ ist, worin x 1 bis 10 ist, und worin R in $R_3Al$ Phenyl, Naphthyl, Biphenyl oder mit $C_xH_{2x+1}$, $C_xH_{2x+1}O$, Fluorid, Chlorid oder Bromid substituiertes Phenyl, Naphthyl oder Biphenyl ist; worin eine der Gruppen R in $R_3Al$ gegebenenfalls Wasserstoff ist; wobei das Polymer durch Erhitzen des $R_2AlNH_2$ und des $R_3Al$ auf eine Temperatur im Bereich von 120° bis 200° C gebildet wird.

**2.** Formteil aus dem Polymer nach Anspruch 1.

**3.** Verbundwerkstoff aus einem Polymer nach Anspruch 1 und einem oder mehreren eines anorganischen Oxids, Carbids oder Nitrids.

**4.** Verfahren zur Herstellung eines Verbundwerkstoffs aus AlN und einem oder mehreren aus $SiO_2$, $Si_3N_4$, SiC, $Al_4C_3$, TiC, ZrC, $B_2O_3$, BN, $Al_2O_3$, $TiO_2$ TiN, $ZrO_2$ und $Mg_2Al_4Si_5O_{18}$ durch Härten eines Verbundwerkstoffs nach Anspruch 3 und Erhitzen auf eine Temperatur von 800° bis 1000° C in Gegenwart von Ammoniak oder Hydrazin.

**5.** Verfahren zur Herstellung einer Faser aus dem Polymer nach Anspruch 1 durch Schmelzformen einer Faser aus dem Polymer in viskos flüssigem Zustand.

**6.** Verfahren zur Herstellung einer Faser aus dem Polymer nach Anspruch 1 durch Bilden einer Faser aus einer Lösung des Polymers.

**7.** Verfahren zur Herstellung einer Faser aus Aluminiumnitrid durch Härten einer Faser aus dem Polymer nach Anspruch 1 und Erhitzen auf einem Temperatur von 800° bis 1000° C in Gegenwart von Ammoniak oder Hydrazin.

EP 0 259 164 B1

**8.** Verfahren zur Herstellung eines Formteils aus Aluminiumnitrid durch Härten eines Formteils aus Polymer nach Anspruch 1 und Erhitzen auf eine Temperatur von 800° bis 1000° C in Gegenwart von Ammoniak oder Hydrazin.

**9.** Verfahren zur Herstellung eines Formteils aus einem aluminiumnitridhaltigen Verbundwerkstoff durch Formen eines Verbundwerkstoffs nach Anspruch 3, Härten des geformten Verbundwerkstoffs und Erhitzen des gehärteten Verbundwerkstoffs auf eine Temperatur von 800° bis 1000° C in Gegenwart von Ammoniak oder Hydrazin.

**10.** Sprühgetrocknetes Teilchen eines Polymers nach Anspruch 1.

**11.** Verfahren zur Herstellung eines Verbundwerkstoffs aus $Al_2O_3$, in dem das Polymer nach Anspruch 1 zur Umwandlung in $Al(OH)_3$ Feuchtigkeit ausgesetzt wird und das $Al(OH)_3$ in Gegenwart von wenigstens einem Mitglied der Gruppe $SiO_2$, $B_2O_3$, $TiO_2$, $ZrO_2$ und $Mg_2Al_4Si_5O_{18}$ erhitzt wird.

9